# EUROPÄISCHE PATENTANMELDUNG

(11) **EP 1 074 674 A2**
(43) Veröffentlichungstag der Anmeldung: **07.02.2001**
(21) Anmeldenummer: 00114782.6
(22) Anmeldetag: 10.07.2000
(51) Int. Cl.: E04D 15/04, G01V 3/10, G01V 3/15

(54) **Messvorrichtung zur Erkennung von verdeckten ferromagnetischen Strukturen, insbesondere Trapezblechen in unteren Schichten eines Dachaufbaus**

(30) Priorität: 20.07.1999 DE 19933911
(71) Anmelder: Braas Flachdachsysteme GmbH & Co. KG, 68199 Mannheim (DE)
(72) Erfinder: Rupprecht, Holger, 61250 Usingen (DE); Kranz, Klaus, 65207 Wiesbaden (DE); Mattes, Günter, 71706 Markgröningen (DE); Gürer, Metin, 71706 Markgröningen (DE); Schaal, Erwin, 71287 Weissach (DE)
(74) Vertreter: Kruspig, Volkmar, Dipl.-Ing.

(57) **Zusammenfassung**

Die Erfindung betrifft eine Meßvorrichtung zur Erkennung von verdeckten ferromagnetischen Strukturen in unteren Schichten eines Dachaufbaus und umfaßt eine Senderbaugruppe zur Erzeugung hochfrequenter elektromagnetischer Strahlung mit mindestens einer Sendespule (1) und eine mehrkanalige Empfängerbaugruppe (2), wobei jedem Kanal mindestens eine Empfangsspule zugeordnet ist. Die Empfängerbaugruppe besitzt jeweils einen Verstärker, welcher auf einen Analog-Digital-Wandler führt, wobei der Wandlerausgang mit einem Prozessor zur Signalbewertung in Verbindung steht und der Prozessor eine Anzeigeeinrichtung ansteuert.

## Beschreibung

Die Erfindung betrifft eine Meßvorrichtung zur Erkennung von verdeckten ferromagnetischen Strukturen, insbesondere Trapezblechen in unteren Schichten eines Dachaufbaus gemäß Oberbegriff des Patentanspruches 1.

Bei verdeckten Dachaufbauten mit an der Dachunterseite befindlichen Trapezblechträgern besteht die Schwierigkeit, die Lage der sogenannten Obergurte bei nachträglichen Arbeiten am Dach aufzufinden.
Bisher war es nur mit Hilfe von Probebohrungen durch Setzen von Befestigern möglich, die Lage und den Ort der Obergurte zu bestimmen. Da sich erfahrungsgemäß die Lage, Breite und die Ausrichtung der Obergurte ändern, muß jeweils bei entsprechender Änderung diese Lage neu bestimmt werden und es ist notwendig im Zweifel nicht exakt sitzende Befestiger nachträglich wieder zu entfernen. Ebenso ist es bisher nicht möglich, die genaue Breite und den Mittelpunkt des jeweiligen Obergurtes zu ermitteln.

Zur Groborientierung wurde bisher eine visuelle Sichtung von der Unterseite des Daches vorgenommen, wobei mit Hilfe von Schnurschlägen die von Hand auf dem Dach gelegt wurden, eine gewisse Orientierung erreichbar ist. Derartige Orientierungen sind jedoch mit erheblichen Fehlern behaftet, so daß in einigen Fällen ein Öffnen des Altdaches notwendig ist, um sich ein Bild von Lage und Struktur der verlegten Trapezblechgeometrien machen zu können.

Die Verwendung von Ultraschallmeßgeräten zur Strukturerkennung ist bedingt durch die Dicke des Dachaufbaus, die bis zu 20 cm und mehr betragen kann, nicht möglich. Auch die Anwendung von Mikrowellen zum Auffinden der Trapezbleche wie zur Geometrieanalyse scheidet aus, da das eingespeiste Signal bedingt durch die verwendeten Dämmaterialien einer erheblichen Dämpfung unterliegt, wobei zusätzliche Schwierigkeiten beim Einsatz von metallischen, folienartigen Dampfsperren entstehen.

Aus dem Vorgenannten ist es daher Aufgabe der Erfindung eine Meßvorrichtung zur Erkennung von verdeckten ferromagnetischen Strukturen, insbesondere Trapezblechen in unteren Schichten eines Dachaufbaus anzugeben, mit deren Hilfe es gelingt, vor Ort mit hoher Sicherheit und reproduzierbar Lage und Struktur zu bestimmen und anzuzeigen, so daß nachfolgende Arbeiten mit hoher Qualität ausführbar sind.

Die Lösung der Aufgabe der Erfindung erfolgt mit einer Vorrichtung gemäß den Merkmalen des Patentanspruches 1, wobei die Unteransprüche mindestens zweckmäßige Ausgestaltungen und Weiterbildungen umfassen.

Der Grundgedanke der Erfindung besteht zunächst in der Anwendung hochfrequenter elektromagnetischer Strahlung, welche in die zu untersuchende ferromagnetische Struktur eingekoppelt wird, wobei die Feldverteilung und -beeinflussung, die wiederum strukturbedingt ist, durch eine spezielle Empfängerbaugruppe mit zugeordneten Empfängerspulen selektiert wird.

Die eingesetzte Senderbaugruppe der Meßvorrichtung wirkt mit mindestens einer Sendespule zusammen, wobei die Empfängerbaugruppe mehrkanalig ausgebildet ist und hier jedem Kanal mindestens eine Empfangsspule zugeordnet wird. Die Empfängerbaugruppe umfaßt jeweils einen Verstärker, welcher auf einen Analog-Digital-Wandler führt und wobei die Analog-Digital-Wandler mit einem Prozessor zur Signalbewertung in Verbindung stehen.

Ausgangsseitig steuert der Prozessor eine Anzeigeeinrichtung an, die ein optisches und/oder akustisches Signal beim Erkennen der Lage eines Obergurtes auslöst. Die Sende- und Empfängerspulen sind bevorzugt als Zylinder-, insbesondere als Rechteckspulen ausgebildet und besitzen eine bifilare Wicklung.

Die Längsachse der mindestens einen Sendespule ist im wesentlichen senkrecht zu einer nichtmagnetischen Trägerplatte respektive zur Dachoberfläche und die Empfängerspulen oder die Spulengruppe sind/ist im wesentlichen parallel zur Trägerplatte und von der Sendespule beabstandet angeordnet.

Die Empfängerspulengruppe besteht bevorzugt aus drei Einzelspulen, deren Spulenlängsachsen parallel verlaufen und wobei die Spulen einen gleichen seitlichen Abstand zueinander besitzen.

Die Sendespule befindet sich auf der gedachten Längsachsenverlängerung der mittleren der Einzelspulen und weist zu dieser Spule wie auch zu den übrigen Einzelspulen der Empfängerspulengruppe einen vorgegebenen Abstand auf.

In einer bevorzugten Ausgestaltung der Erfindung sind die Längsachsen der Empfängerspulen um einen Winkel im Bereich von 3° bis 10° bevorzugt 6° zur Sendespule geneigt angeordnet. Mit anderen Worten bilden die Längsachsen der Sendespule und der Empfängerspulen ein rechtwinkliges Dreieck mit einem spitzen Winkel von 3° bis 10°, bevorzugt bis 6°.

Zur Optimierung der Empfangs- und Selektionseigenschaften sind die Empfängerspulen in einem vorgegebenen Abstand zur Trägerplatte und damit wiederum zur Dachoberfläche befindlich.

Die Sendespule ist gemäß der Erfindung als Schwingkreisspule ausgebildet, wobei die Resonanzfrequenz des Schwingkreises im Bereich von 5 bis 10 KHz, bevorzugt bei 6,8 KHz liegt.

Die oben erwähnte Anzeigevorrichtung ist eine optisch und/oder akustisch wirkende Meldeeinheit, welche die Mitte des jeweiligen Obergurtes von Trapezblechanordnungen eines Dachaufbaus beim Darüberhinwegbewegen der Meßvorrichtung, d. h. eine Bewegung dieser über das Dach signalisiert.

Ergänzend besitzt die Vorrichtung eine Markierungseinrichtung um die erkannte Lage des jeweiligen Obergurtes zu kennzeichnen, wobei hierfür beispielsweise auf eine Farbsprühdose, die mit der Meßvorrichtung baulich verbunden ist, zurückgegriffen werden kann.

In einer bevorzugten Ausführungsform der Erfindung besitzt die Vorrichtung eine integrierte Längenmeßeinheit, beispielsweise nach Art eines Drehgebers, der mit einem Antriebsrad der verfahrbaren Vorrichtung verbunden ist. Mit Hilfe der Längenmeßeinrichtung, die mit einer Längenanzeige zusammenwirkt, kann die jeweilige Position ermittelt werden und es besteht die Möglichkeit, Abmessungen für einzusetzende Materialmengen zu bestimmen sowie aufgefundene Strukturen von Trapezblechanordnungen quasi zu kartographieren.

Zur Optimierung des Wirkungsgrades der Meßvorrichtung, insbesondere im Batterie- oder Akkumulatorbetrieb, wird auf eine Gegentaktendstufe der Senderbaugruppe zurückgegriffen, wobei je nach Scantiefe und Stärke des Dachaufbaus die Betriebsspannung umgeschalten, d. h. mit höherer Dachauftragsdicke vergrößert werden kann.

Die von der Senderbaugruppe erzeugte Hochfrequenz ist im wesentlichen konstant, wird jedoch pulsweiten moduliert, um einen exakt ausgeprägten Signalverlauf zu erhalten, der dann vom Prozessor der Meßvorrichtung entsprechend auswertbar ist.

Für die notwendige Offsetkorrektur der Empfängerbaugruppe wird dem Prozessor für jeden Empfangskanal über einen Analog-Digital-Wandler ein Korrekturwert zugeführt.

Ebenfalls im Sinne der Vereinfachung des schaltungstechnischen Aufbaus sowie zur Energieoptimierung kommt ein Prozessor zur Anwendung, welcher on Chip Analog-Digital-Wandler besitzt sowie welcher mindestens einen pulsweiten modulierten Ausgang aufweist.
Die Verstärker der Empfängerbaugruppe führen jeweils auf eine der Analog-Digital-Wandlereingänge, wobei der pulsweitenmodulierte Ausgang des Prozessors am Steuereingang der Sendeendstufe angeschlossen ist.

Bei der vorstehend beschriebenen Ausführungsform der Erfindung wird von drei parallel arbeitenden Empfängerbaugruppen mit jeweils einer Empfänger- bzw. Empfangsspule ausgegangen, jedoch besteht auch die Möglichkeit die Kanalzahl zu erhöhen, was ohne weiteres prozessorseitig möglich ist. Die Bewegung der Meßvorrichtung mit den dort integrierten Sende- und Empfangsspulen soll im wesentlichen rechtwinklig zu den erwarteten Sicken der Trapezbleche ausgeführt werden, um ein möglichst scharfes und deutliches Signal zu erhalten.

In Abhängigkeit von der Meßaufgabe besteht alternativ die Möglichkeit, die Sendespule fest anzuordnen und lediglich die Empfängerspulen bei gleichzeitiger Auswertung der empfangenen Signale zu bewegen bzw. eine Relativbewegung zwischen Empfänger- und Sendespulen auszuführen. Hierfür kann die transportable Meßvorrichtung einen entsprechend modifizierten Meßkopf besitzen, der nach Ermittlung einer Grobposition der Obergurte manuell oder motorisch betrieben bewegbar ist, um die exakte Mittellage bzw. eine Feinposition aufzufinden.

Durch die Möglichkeit der Anpassung der Sendeleistung an den jeweiligen Dachaufbau bleibt die Selektivität der Vorrichtung erhalten und es kann jeweils im energieoptimalen Betrieb gearbeitet werden, so daß der Vorort-Einsatz der Meßvorrichtung nicht durch zu häufigen Wechsel der Primär- oder Sekundärelemente zur Betriebsspannungsversorung unterbrochen werden muß.

Die Erfindung bezieht sich bevorzugt auf das Auffinden von verdeckten Trapezblechen in Dachaufbauten, jedoch sind auch andere ferromagnetische Strukturen mit gewisser regelmäßiger Geometrie auffindbar, so daß sich hier weitere Anwendungsbereiche erschließen, ohne das Grundkonzept der Erfindung zu verlassen.

Durch die Möglichkeit eines wiederholten oder erneuten Abgleiches sowie Offset-Korrektur ist gewährleistet, daß die Meßvorrichtung auch bei Überlappungen von Trapezblechen den Obergurt jeweils zuverlässig erkennt, wobei die im Dachschichtaufbau möglicherweise vorhandenen Aluminiumdampfsperrfolien das Meßergebnis nicht nachteilig beeinflussen.

Bei einer konkret realisierten Meßvorrichtung sind alle notwendigen Komponenten in einem, wie vorerwähnt fahrbaren Gehäuse integriert, wobei die Gesamtmasse durch Kunststoffeinsatz gering gehalten werden konnte. Am beispielsweise realisierten Gerät befindet sich ein ausklappbarer Betätigungsgriff, so daß die Meßvorrichtung rollerartig über das zu untersuchende Dach bewegt werden kann. Längs der Trägerplatte bzw. längs des Gehäuses ist eine Anzeigeeinrichtung aus einer LED-Anzeigenreihe vorgesehen, mit deren Hilfe die Lage des Obergurtes identifizierbar ist. Mittels der ggfs. fernbetätigbaren Markierungseinrichtung gelingt es dann für die nachfolgenden Arbeiten in einfacher Weise eine mindestens zeitweise haltbare Kennzeichnung, z. B. für das Setzen von Befestigungsmitteln aufzubringen.

Die Erfindung soll anhand eines Ausführungsbeispieles sowie unter Zuhilfenahme von Figuren näher erläutert werden.

Hierbei zeigen:
- Fig. 1: eine Seitenansicht und eine Draufsicht auf die Sensorik, umfassend Sende- und Empfängerspulen;
- Fig. 2: eine Ausführungsform einer realisierten Meßvorrichtung als radgeführtes, bewegliches Sickensuchgerät im Einsatz- sowie im zusammengeklappten Zustand und
- Fig. 3: ein Blockschaltbild des elektronischen Aufbaus der Meßvorrichtung.

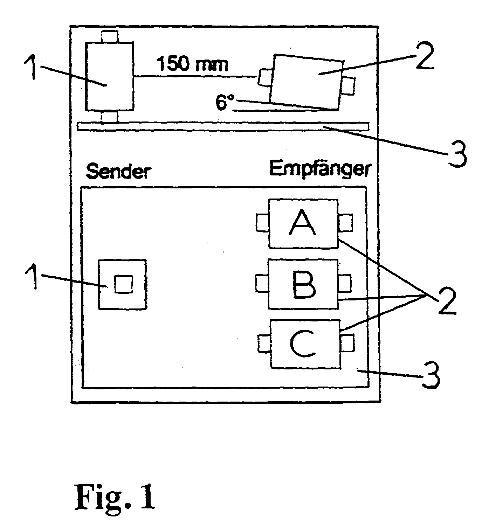

Die Meßvorrichtung gemäß Ausführungsbeispiel besitzt eine spezielle Sensorik, umfassend mindestens eine Sendespule 1 und hiervon benachbart angeordnete Empfängerspulen 2. Wie die Figur 1 erkennen läßt, sind die Empfängerspulen 2 als Gruppe ausgebildet, wobei die Längsachsen der Empfängerspulen im wesentlichen parallel zueinander verlaufen und die Spulen selbst bezüglich zu einer Außenkante einen gleichmäßigen Abstand besitzen.

Die Sendespule 1 ist zur nichtmagnetischen Trägerplatte 3 im wesentlichen senkrecht befestigt, wobei die Empfängerspulen 2 im wesentlichen parallel zur Trägerplatte 3 und von dieser einen Abstand besitzend angeordnet sind.

Wie aus der Figur 1 ebenfalls ersichtlich, sind die Längsachsen der Empfängerspulen 2 um einen Winkel im Bereich von den wesentlichen sechs Grad zur Sendespule 1 geneigt angebracht, wobei überraschenderweise im Bereich dieses Neigungswinkels eine optimierte Tiefenselektierbarkeit gegeben ist. Der Abstand der Empfangsspulen 2 zur Trägerplatte 3 beträgt bei der bevorzugten Sendefrequenz von 6,8 KHz im wesentlichen 5 mm. Die Sendespule 1 ist von der mittleren der Empfangsspulen 2 im wesentlichen 150 mm entfernt befindlich.

Grundsätzlich gilt, daß andere ferromagnetische Komponenten von der Sensorikeinheit möglichst weit entfernt anzuordnen sind, wobei der Abstand ≥ 150 mm bevorzugt ist. Kleinere metallische Teile, welche baulich fest mit der Meßvorrichtung verbunden sind, beeinflussen die Meßergebnisse nicht oder nur unwesentlich.

Bei dem Ausführungsbeispiel der Erfindung sind auf die Sendespule 1 etwa 2000 Windungen mit einem Drahtdurchmesser von etwa 0,3 mm aufgebracht. Die Empfangsspulen 2 weisen eine Windungszahl von im wesentlichen 5000 bei einem Drahtdurchmesser von 0,16 mm auf. Als Kern wird auf einen Wickelkörper M 42 zurückgegriffen.

Die Spulen sind als Zylinder-, bevorzugt Rechteckspulen mit bifilarer Wicklung ausgebildet, wobei die Sendespule 1 die Schwingkreisspule des HF-Teiles der Elektronikbaugruppe ist.

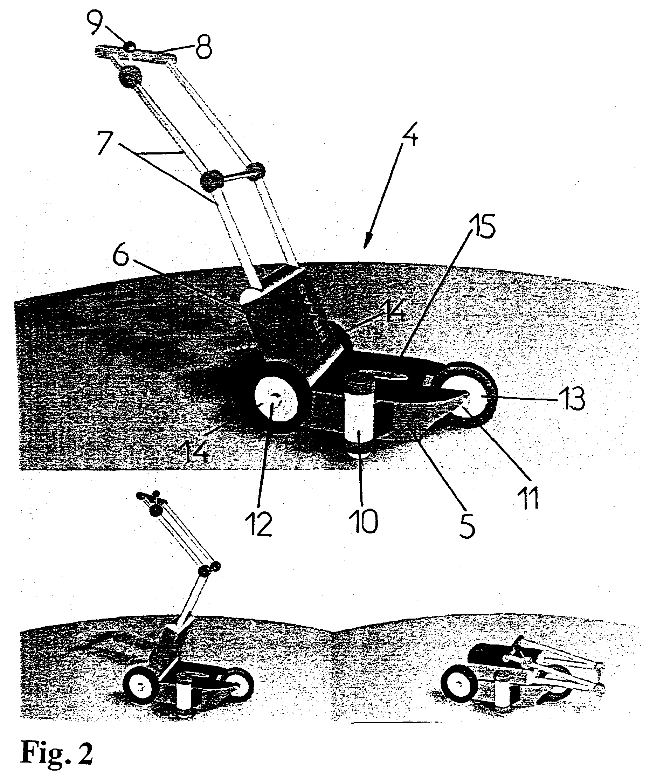

Beim Bewegen der Sensorik, beispielsweise mit dem Sickensuchgerät 4 wie anhand der Figur 2 gezeigt, können die Positionen von Sicken- und Obergurten des Trapezbleches optisch und/oder akustisch erkannt werden. Zur optischen Anzeige kann eine LED- (lichtemittierende Dioden) Reihe verwendet werden, die von einem Auswerte-Prozessor der Elektronikbaugruppe über einen Treiberbaustein angesteuert wird. Zusätzlich kann die Mittenlage quasi als Signalmaximum oder Signalminimum, je nach Auswerteverfahren akustisch signalisiert werden.

Das im oberen Teil der Figur 2 gezeigte, im Einsatzzustand befindliche Sickensuchgerät 4 umfaßt ein bevorzugt zweiteiliges Gehäuse mit einem Grundkörper 5 sowie einem mit diesem gelenkig verbundenen weiteren Körper 6. Am Körper 6 ist ein ebenfalls gelenkiges Gestänge 7 nebst einem Griffteil 8 zum leichten Bewegen des Sickensuchgerätes 4 angeordnet. In der Nähe des Griffteiles 8 befindet sich ein Bedienhebel 9. Über dem Bedienhebel 9 besteht beispielsweise die Möglichkeit, die mit dem Sickensuchgerät 4 baulich verbundene Markierungseinrichtung 10 in Form einer Farbsprühdüse zu aktivieren.

Am Grundkörper 5 ist eine Vorderachse 11 sowie bevorzugt im Gelenkbereich eine Hinterachse 12 befindlich. Nahezu mittig im vorderen Teil des Grundkörpers 5, d. h. über die Vorderachse 11 geführt, ist ein erstes Rad 13 montiert. Im Bereich der Hinterachse 12 sind jeweils seitlich zwei Hinterräder 14 angebracht, so daß die gewünschte leichte Verfahrbarkeit des Sickensuchgerätes 4 gewährleistet ist.

Über die Möglichkeit des gelenkigen Zusammenklappens zwischen Körper 6 und Grundkörper 5 sowie hinsichtlich des Gestänges 7, wie im unteren Teil der Figur 2 gezeigt, kann der Transportraum für das Gerät verkleinert und insgesamt der Transport von Einsatzort zu Einsatzort erleichtert werden.

Auf der Oberseite des Grundkörpers 5 ist eine Zeile aus lichtemittierenden Dioden vorgesehen, die dem optischen Signalisieren einer aufgefundenen Sicke bzw. eines Obergurtes von Trapezflächen oder dergleichen metallischen Strukturen dienen. Zusätzlich kann ein akustischer Signalgeber vorhanden sein.

Insbesondere der Teil des Grundkörpers 5, welcher die Sensorik, d. h. die Spulengruppen aufnimmt, besteht aus einem nichtferromagnetischen, nichtmetallischen Material, bevorzugt aus Kunststoff.

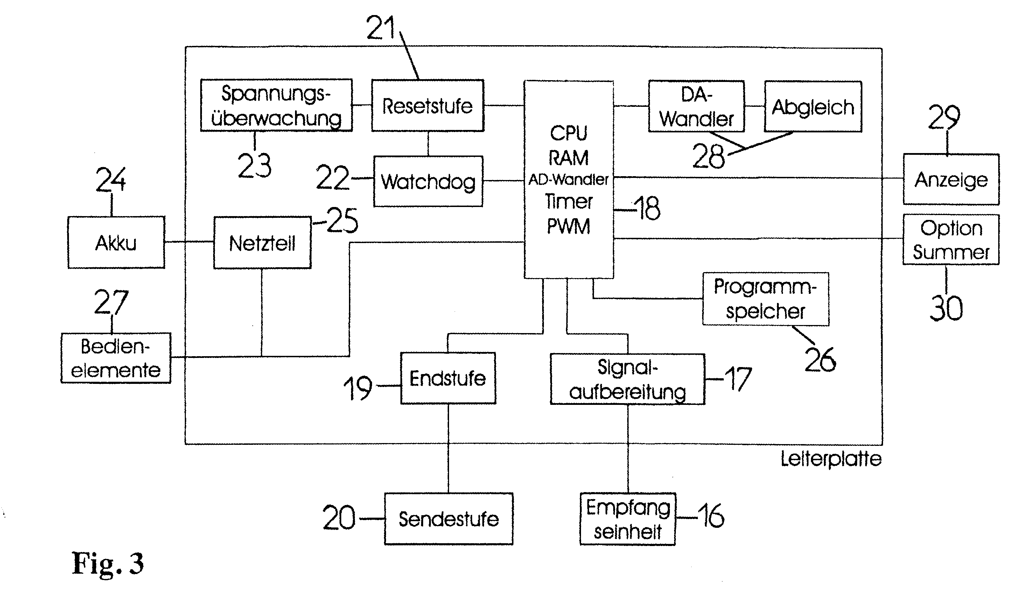

Das Blockschaltbild gemäß Figur 3 läßt die elektronische Grundstruktur des Sickensuchgerätes erkennen.
Die die Spulen aufweisende Empfangseinheit 16 steht über eine Signalaufbereitungsbaugruppe 17 mit dem Prozessor 18 in Verbindung. Der PWM-Ausgang des Prozessors 18 führt auf eine Endstufe 19 zur Hochfrequenzverstärkung, welche wiederum mit der Sendestufe 20, enthaltend die Sendespule in Verbindung steht.

Zum definierten Starten des Prozessors 18 ist eine Resetstufe 21 mit Watchdogschaltung 22 vorgesehen. Die Resetstufe 21 gibt den Prozessor 18 erst dann frei, wenn die Betriebsspannung stabil ist. Über die Spannungsüberwachung 23 wird überprüft, ob die Betriebsspannung um mehr als einen vorgegebenen Wert absinkt, so daß ein automatisches Zurücksetzen des Prozessors 18 erfolgt. Die Watchdog-Baugruppe 22 wirkt als Sicherheitsbaustein, der den Prozessor 18 überwacht. Innerhalb einer vorgegebenen Rückmeldezeit muß der Prozessor 18 ein Signal ausgeben, indem der Triggereingang der Watchdog-Baugruppe 22 eine digitale Zustandsänderung erfährt.

Ein vorhandener Akkumulator 24 dient der Stromversorgung des gesamten Gerätes, wobei der Akku 24 mit einem Stabilisierungsnetzteil 25 zusammenwirkt.

Alle notwendigen Betriebsprogramme sind in einem Programmspeicher 26 abgelegt, der am Prozessor 18 angeschlossen ist. Ein manuelles Funktionsauslösen erfolgt über die Bedienelemente 27, die beispielsweise im Bedienhebel 9 (Figur 2) integriert sein können.

Mit Hilfe eines Abgleichsbausteins 28 umfassend einen Digital-Analog-Wandler, der am Prozessor 18 angeschlossen ist, können notwendige Eichvorgänge bzw. die gewünschte Offset-Korrektur, vorgenommen werden.

Weiterhin sind am Prozessor 18 eine optische Anzeigeeinheit 29 sowie optional ein Summer 30 angeschlossen.

Die Verstärkung des Eingangssignals erfolgt nach Korrektur eines Offsetwertes. Das verstärkte Signal wird dann dem Analogeingang eines Analog-Digital-Wandlers, der zweckmäßigerweise on Chip im Prozessor integriert ist, zugeführt.
Unter Berücksichtung der Tatsache, daß das Eingangssignal je nach Dicke des Dachaufbaus bzw. Dicke der Isolation mehr oder weniger groß ist, wird eine Verstärkung im wesentlichen um den Faktor von etwa 300 eingestellt. Die Offset-Korrektur wird in Abhängigkeit von der Dicke der Isolation bzw. des Dachaufbaus wiederholt oder aktualisiert. Für die Offset-Korrektur ist in jeder Empfangsstufe ein Digital-Analog-Wandler vorgesehen, wobei der Prozessor über einen entsprechenden seriellen Datenstrom alle vorhandenen drei Digital-Analog-Wandler gleichzeitig einstellt. Die Ausgangsspannung der Digital-Analog-Wandler wird dann über einen Impedanzwandler einem weiteren Verstärker zugeführt.

Sendeseitig wird die Grundfrequenz aus dem Prozessor generiert, wobei hierfür auf einen dort vorhandenen pulsweitenmodulierten Ausgang zurückgegriffen wird. Um eine entsprechende Sendeenergie zu erreichen, d. h. um große Tiefen selektieren zu können, wird eine entsprechende Endstufe nachgeschaltet. Konkret wird auf eine Gegentaktendstufe zurückgegriffen.

Weiterhin bildet die Sendespule 1 einen Teil des Sender-Schwingkreises, wobei durch entsprechende Serien- und Parallelschaltung von Kondensatoren eine exakte Einstellung der Resonanzfrequenz von 6,8 KHz erreichbar ist. Durch Einsatz der Gegentaktendstufe kann die Sendespannung auf etwa 100 Volt erhöht werden, so daß durch optimierte Resonanzbedingungen die erforderliche Energie für die Senderbaugruppe in Grenzen liegt. Um die verschiedenen Meßtiefen im Bereich von im wesentlichen 5 bis 20 cm erfassen zu können, besteht die Möglichkeit, die Betriebsspannung des Sendeschwingkreises umzuschalten.

Beispielsweise wird bei einer Scantiefe von 5 cm eine Spannung von 6 Volt, bei 10 cm und 15 cm eine Spannung von 24 Volt und bei einer Dachaufbaudicke von 20 cm auf eine Spannung von 30 Volt im Sendekreis zurückgegriffen. Diese Umschaltung kann nach Vorgabe der erwarteten Dicke des Dachaufbaues manuell aber auch in Abhängigkeit von der nachgewiesenen Empfangsenergie automatisch erfolgen.

Auswerteseitig werden die drei vorhandenen Empfangskanäle A bis C separat behandelt, wobei zunächst eine Mittelwertbildung aus beispielsweise 20 oder mehr Messungen vorzunehmen ist. Durch diese Mittelwertbildung verbessert sich die elektromagnetische Verträglichkeit der Meßvorrichtung und es werden Schwankungen des Meßsignales ausgeglichen.

Bei Bewegung des Sickenmeßgerätes gemäß Figur 2 über ein Dach wird im Bereich der Sicke ein höherer Meßwert beobachtet als im Bereich des Obergurtes. Intern wird über den Prozessor eine entsprechende Auswertung vorgenommen, wobei ein Relationsvergleich der nacheinanderfolgenden Meßwerte vorgenommen wird und hieraus ein Richtungsanzeiger zu setzen ist. Aus dem Richtungsanzeigersignal wird dann ein Signal zum Löschen oder zum Setzen einer der lichtimitierenden Dioden abgeleitet.

Insgesamt gelingt es mit der beschriebenen Meßvorrichtung eine einfache und kostengünstige Lösung zur Erkennung von verdeckten ferromagnetischen Strukturen anzugeben, mit deren Hilfe in reproduzierbarer Weise, insbesondere Trapezbleche in unteren Schichten eines Dachaufbaus erkannt und für spätere Arbeiten markierbar sind.

Die energieoptimale Auslegung der elektronischen Komponenten der Meßvorrichtung ermöglicht einen längeren Vorortbetrieb, wobei gemäß dem jeweiligen Dachaufbau im Bereich einer optimalen Sendeleistung gearbeitet wird. Die Signalbewertung erfolgt durch einen in der Vorrichtung enthaltenen Prozessor, welcher eine optisch und/oder akustisch wirkende Anzeigeeinrichtung ansteuert. Durch die spezielle Anordnung von Sendespule und der Empfangsspule bzw. Empfangsspulengruppe ist die gewünschte Selektivität auch bei unterschiedlichen Formen der ferromagnetischen Strukturen oder verschieden dicken Dachaufbauten gewährleistet.

### Bezugszeichenliste

- 1: Sendespule
- 2: Empfängerspule
- 3: Trägerplatte
- 4: Sickensuchgerät
- 5: Grundkörper
- 6: Körper
- 7: Gestänge
- 8: Griffteil
- 9: Bedienhebel
- 10: Markierungseinrichtung
- 11: Vorderachse
- 12: Hinterachse
- 13: Vorderrad
- 14: Hinterrad
- 15: LED-Zeile
- 16: Empfangseinheit
- 17: Signalaufbereitungsbaugruppe
- 18: Prozessor
- 19: Endstufe
- 20: Sendestufe
- 21: Resetstufe
- 22: Watchdog
- 23: Spannungsüberwachung
- 24: Akkumulator
- 25: Stabilisierungsnetzteil
- 26: Programmspeicher
- 27: Bedienelemente
- 28: Abgleichbaustein mit DA-Wandler
- 29: Anzeigeeinheit
- 30: Summer

## Patentansprüche

1. Meßvorrichtung zur Erkennung von verdeckten ferromagnetischen Strukturen, insbesondere Trapezblechen in unteren Schichten eines Dachaufbaus,
**gekennzeichnet durch**
eine Senderbaugruppe zur Erzeugung hochfrequenter, elektromagnetischer Strahlung mit mindestens einer Sendespule, eine mehrkanalige Empfängerbaugruppe, wobei jedem Kanal mindestens eine Empfangsspule zugeordnet ist und die Empfängerbaugruppe jeweils einen Verstärker umfaßt, welcher auf einen Analog-Digital-Wandler führt, weiterhin der Analog-Digital-Wandler mit einem Prozessor zur Signalbewertung in Verbindung steht und dieser Prozessor eine Anzeigeeinrichtung ansteuert.

2. Meßvorrichtung nach Anspruch 1,
**dadurch gekennzeichnet**,
daß die Spulen als Zylinder- oder Rechteckspulen ausgebildet sind, wobei die Längsachse der mindestens einen Sendespule im wesentlichen senkrecht zu einer nichtmagnetischen Trägerplatte und die Empfängerspule oder Spulengruppe im wesentlichen parallel zur Trägerplatte und von der Sendespule beabstandet angeordnet sind.

3. Meßvorrichtung nach Anspruch 2,
**dadurch gekennzeichnet**,
daß die Empfängerspulengruppe aus drei Einzelspulen besteht, deren Spulenlängsachsen im wesentlichen parallel verlaufen und wobei die Einzelspulen gleichmäßig seitlich beabstandet angeordnet sind.

4. Meßvorrichtung nach Anspruch 3,
**dadurch gekennzeichnet**,
daß die Sendespule auf einer gedachten Längsachsenverlängerung der mittleren der Einzelspulen angeordnet ist.

5. Meßvorrichtung nach einem der Ansprüche 2 bis 4,
**dadurch gekennzeichnet**,
daß die Längsachse der Empfängerspulen um einen Winkel im Bereich von 3° bis 10° bevorzugt 6° zur Längsachse der Sendespule geneigt angeordnet ist/sind.

6. Meßvorrichtung nach Anspruch 5,
**dadurch gekennzeichnet**,
daß die Empfängerspulen in einem Abstand zur Trägerplatte der Vorrichtung angeordnet sind.

7. Meßvorrichtung nach einem der vorangegangenen Ansprüche,
**dadurch gekennzeichnet**,
daß die Sendespule eine Schwingkreisspule ist, wobei die Resonanzfrequenz des Schwingkreises im Bereich von 5 bis 10 KHz, bevorzugt bei 6,8 KHz liegt.

8. Meßvorrichtung nach Anspruch 1,
**dadurch gekennzeichnet**,
daß die Anzeigeeinrichtung eine optische und/oder akustische Meldeeinheit ist, welche die Mitte des jeweiligen Obergurtes von Trapezblechanordnungen eines Dachaufbaus beim Bewegen der Meßvorrichtung über das Dach signalisiert.

9. Meßvorrichtung nach Anspruch 8,
**dadurch gekennzeichnet**,
daß die Vorrichtung eine Einrichtung zum Markieren der erkannten Lage des jeweiligen Obergurtes oder der jeweiligen Sicke aufweist.

10. Meßvorrichtung nach Anspruch 9,
**dadurch gekennzeichnet**,
daß die Markierungseinrichtung eine Farbsprühdüse oder dergleichen Mittel umfaßt.

11. Meßvorrichtung nach Anspruch 1,
**dadurch gekennzeichnet**,
daß die Senderbaugruppe eine Gegentaktsendeendstufe mit je nach Scantiefe und Dachaufbau umschaltbarer Betriebsspannung aufweist.

12. Meßvorrichtung nach Anspruch 11,
**dadurch gekennzeichnet**,
daß die von der Senderbaugruppe erzeugte Frequenz im wesentlichen konstant, jedoch pulsweitenmoduliert ist.

13. Meßvorrichtung nach Anspruch 1,
**dadurch gekennzeichnet**,
daß für die Offset-Korrektur der Empfängerbaugruppe dem Prozessor für jeden Empfangskanal über einen Digital-Analog-Wandler ein Korrekturwert zugeführt wird.

14. Meßvorrichtung nach einem der vorangegangenen Ansprüche,
**dadurch gekennzeichnet**,
daß der Prozessor on Chip Analog-Digital-Wandler sowie mindestens einen pulsweiten modulierten Ausgang aufweist, wobei die Verstärker der Empfängerbaugruppe jeweils auf einen der Analog-Digital-Wandler führen und der pulsweitenmodulierte Ausgang am Steuereingang der Sendeendstufe angeschlossen ist.

15. Meßvorrichtung nach einem der vorangegangenen Ansprüche,
**dadurch gekennzeichnet**,
daß selbige in ein fahrbares Gehäuse baulich integriert ist, wobei am oder im Gehäuse weiterhin eine Längen- oder Wegebestimmungseinrichtung anordenbar ist.
